# EUROPÄISCHE PATENTSCHRIFT

(11) **EP 4 048 077 B1**
(45) Veröffentlichungstag und Bekanntmachung des Hinweises auf die Patenterteilung: **20.12.2023**
(21) Anmeldenummer: 20796795.1
(22) Anmeldetag: 22.10.2020
(51) Int. Cl.: A22B 5/00, A22C 17/00, A23B 4/09

(54) **VORRICHTUNG ZUM EINBRINGEN VON TROCKENEISPELLETS IN FRISCHFLEISCH**
DEVICE AND METHOD FOR TREATMENT OF PIECES OF MEAT WITH DRY ICE PELLETS
DISPOSITIF ET PROCÉDÉ DE TRAITEMENT DE MORCEAUX DE VIANDE AVEC DES PELLETS DE GLACE CARBONIQUE

(30) Priorität: 25.10.2019 DE 102019007438
(43) Veröffentlichungstag der Anmeldung: 31.08.2022
(73) Patentinhaber: Messer SE & Co. KGaA, 65812 Bad Soden (DE); Dam Tech Bvda, 8501 Bissigem (BE)
(72) Erfinder: MUSSLY, David, 8501 Bissegem (BE); CLAEYS, Jean-Claude, 2070 Zwijndrecht (BE)
(86) Internationale Anmeldenummer: PCT/EP2020/079795
(87) Internationale Veröffentlichungsnummer: WO 2021/078883

(56) Entgegenhaltungen:
- EP-A1- 0 707 796
- DE-A1- 2 728 143
- US-A- 5 413 526

## Beschreibung

Die Erfindung betrifft eine Vorrichtung zum Einbringen von Trockeneispellets in Frischfleisch.

Die biochemischen Vorgänge sowie die strukturellen Veränderungen *post mortem* im Fleisch verschiedener Schlachttiere und die damit einhergehenden Änderungen in der Fleischqualität werden beispielsweise in dem Artikel von R. Binke: "Vom Muskel zum Fleisch", Mitteilungsblatt BAFF 42, Nr. 162, S. 347 (2003) beschrieben.

Durch die Anhäufung des Stoffwechselproduktes Laktat (Salz der Milchsäure) sinkt der Muskel-pH-Wert innerhalb weniger Stunden von pH 6,8 bis 7,2 auf pH 5,5. Man bezeichnet diesen Prozess auch als Säuerung. Die Geschwindigkeit dieses Prozesses und der abschließende pH-Wert sind von großer Bedeutung für den Reifungsprozess und die Lagerfähigkeit und somit für die Qualität des Fleisches. Da diese Vorgänge temperaturabhängig sind, hat auch der nach der Schlachtung erfolgende Kühlprozess einen entscheidenden Einfluss auf die Fleischqualität.

Hohe Temperaturen im Fleisch führen zu schnell ablaufenden biochemischen Reaktionen, die zu einer zu raschen Absenkung des pH-Werts auf Werte unter 5,6 und in der Folge zur Ausprägung von unerwünschtem "PSE-Fleisch" führen können. Andererseits ist eine zu rasche Kühlung des Schlachtkörpers auf Temperaturen von unter 10°C vor Eintritt der Totenstarre ebenfalls nachteilig, da sie die für eine gute Fleischqualität notwendige Säuerung des Fleisches hemmt und im Muskel eine Kälteverkürzung ("Cold Shortening") verursacht. Das entstehende "DFD - Fleisch" (beim Schwein) oder "DCB-Fleisch" (beim Rind) ist durch einen hohen pH-Wert von über 6,2 geprägt; es ist zäh und hat ein geringes Safthaltevermögen.

Darüber hinaus ist es insbesondere bei größeren Fleischstücken von Bedeutung, dass die Abkühlung homogen im gesamten Fleischvolumen erfolgt, da eine ungleiche Abkühlgeschwindigkeit zu ungleichen Reifungszuständen und somit ungleichen Fleischqualitäten innerhalb des Fleischstücks führt. Dies führt beispielsweise bei der Verarbeitung von Schinken dazu, dass das tief im Innern in unmittelbarer Nähe zum Knochen gelegene Fleisch häufig als minderwertiges Fleisch entfernt und vom weiteren Verarbeitungsprozess ausgeschlossen wird.

Als "Frischfleisch" soll im Folgenden Fleisch im Behandlungszeitraum zwischen der Schlachtung und der abgeschlossenen Fleischreifung bezeichnet werden. Die Fleischreifung umfasst eine Reihe biochemischer Reaktionen, die nach der Schlachtung im Muskelfleisch stattfinden. Verschiedene fleischeigene Enzyme bewirken diese Prozesse und fördern so die Genussfähigkeit von Fleisch. Der Reifungsprozess muss unter kontrollierten Bedingungen, insbesondere bei einer kontrollierten Temperatur und einem kontrollierten pH-Wert erfolgen.

Als "Trockeneispellets" sollen im Folgenden harte Teile aus festem Kohlendioxid verstanden werden, die durch Pressen von Kohlendioxidschnee oder durch Gefrieren von flüssigem Kohlendioxid hergestellt wurden.

Aus der EP 0 707 796 A1 und der US 5 413 526 B1 sind Apparaturen bekannt, mittels denen ein festes Kühlmittel, insbesondere Trockeneis, in Fleischstücke injiziert werden kann. Die Apparaturen umfassen jeweils ein Schlitzmittel, mittels dessen in dem zu kühlenden Fleischstück eine Tasche gebildet wird, in die anschließend mittels einer Fülleinrichtung ein Trockeneisblock oder eine Vielzahl kleinerer Trockeneispellets aus festem Kohlendioxid eingefüllt wird. Nachteilig bei diesen Gegenständen ist, dass aufgrund der Zuführung einer vergleichsweise großen Menge an Kühlmittel in einzelne große Taschen eine sehr inhomogene Kühlung erfolgt, die wiederum zu einer inhomogenen Fleischqualität führt. Zudem können die Trockeneisteile in den durch das Schlitzmittel hervorgerufenen Einschnitten nicht immer sicher gehalten werden, was in der Folge zu zusätzlichem Arbeitsaufwand und Verlust an Kühlmittel führt.

Der Erfindung liegt daher die Aufgabe zu Grunde, den Reifungsprozess von Frischfleisch nach der Schlachtung dahingehend zu verbessern, dass eine homogenere Fleischqualität insbesondere bei großvolumigen Fleischstücken, wie beispielsweise unzerteilten Schinken, erzielt wird und der Aufwand an Arbeit und Kühlmedium gegenüber bekannten Vorrichtungen reduziert wird.

Gelöst ist diese Aufgabe durch eine Vorrichtung mit den Merkmalen des Patentanspruchs 1. Vorteilhafte Ausgestaltungen der Erfindung sind in den Unteransprüchen angegeben.

Erfindungsgemäß weist eine Vorrichtung zum Einbringen von Trockeneispellets in Frischfleisch ein Gehäuse mit einem Hinterabschnitt und einem Vorderabschnitt auf, zwischen denen eine Ladeaufnahme zum Aufnehmen einer Ladeeinheit angeordnet ist. Im Gehäuse ist eine Injektionseinrichtung oder eine Mehrzahl an Injektionseinrichtungen zum Einbringen von Trockeneispellets angeordnet. Die Injektionseinrichtung bzw. die Injektionseinrichtungen umfassen jeweils einen Führungskanal im Hinterabschnitt und im Vorderabschnitt des Gehäuses, die miteinander fluchten. Der im Vorderabschnitt verlaufende vordere Führungskanal mündet an einer Frontseite des Gehäuses aus. Weiterhin umfasst die Injektionseinrichtung eine an ihrem frontseitigen, distalen Ende zugespitzte Stichnadel, die so dimensioniert ist, dass sie in den Führungskanälen axial bewegbar ist. Die Stichnadel steht mit einer Antriebseinrichtung in Wirkverbindung, mittels der die Stichnadel zwischen einer Arbeitsposition und einer Ruheposition bewegbar ist. In der Arbeitsposition steht die Stichnadel von der Frontseite des Vorderabschnitts, wie auch von sämtlichen übrigen Teilen des Gehäuses, vor; die angespitzte Zuformung des distalen Endes der Stichnadel ermöglicht es dabei, die Stichnadel, und nur diese, tief in ein zu behandelndes Fleischstück eindringen zu lassen und dort einen Stichkanal zu hinterlassen, dessen Innendurchmesser dem Außendurchmesser der Stichnadel entspricht. In ihrer Ruheposition ist die Stichnadel im hinteren Führungskanal im Hinterabschnitt des Gehäuses aufgenommen.

Weiterhin umfasst die Vorrichtung eine mit dem Gehäuse lösbar verbindbare Ladeeinheit, die mit zumindest einer mit einem Trockeneispellet bestückbaren Durchführung ausgestattet ist. Im Einbauzustand der Ladeeinheit ist diese Durchführung bzw. ist zumindest eine der Durchführungen zwischen den Führungskanälen in Hinter- und Vorderabschnitt angeordnet und fluchtet mit diesen; der Führungskanal im Hinterabschnitt, die Durchführung und der Führungskanal im Vorderabschnitt des Gehäuses bilden auf diese Weise zusammen einen durchgehenden Kanal, in dem die Stichnadel axial bewegbar ist. Während des Einbaus der Ladeeinheit in die Ladeaufnahme befindet sich die Stichnadel der wenigstens einen Injektionseinrichtung in ihrer Ruheposition im Hinterabschnitt, also hinter einem sich in der Durchführung der Ladeeinheit befindlichen Kohlendioxidpellet.

Zur Behandlung eines Fleischstücks, beispielsweise eines Schinkens, wird die erfindungsgemäße Vorrichtung mit der Frontseite des Gehäuses vor das zu behandelnden Fleischstück platziert. Eine Ladeeinheit ist zunächst noch nicht in der Ladeaufnahme eingebaut oder so in der Ladeaufnahme angeordnet, dass leere, d.h. nicht mit einem Kohlendioxidpellet bestückte Durchführungen mit den Führungskanälen einer Injektionseinheit/en fluchten. Sodann wird die Antriebseinrichtung der Injektionseinrichtung bzw. werden die Antriebseinrichtungen der Injektionseinrichtungen betätigt, und die jeweilige Stichnadel schnellt aus ihrer Ruheposition in ihre Arbeitsposition d.h. aus der frontseitigen Mündungsöffnung des vorderen Führungskanals heraus. Vor der Mündungsöffnung dringt die Stichnadel bzw. dringen die Stichnadeln mit dem zugespitzten distalen Enden in das Gewebe des Fleischstücks ein und bilden dort die erwähnten Stichkanäle aus. Anschließend wird die Stichnadel bzw. werden die Stichnadeln von der jeweiligen Antriebseinrichtung in ihre Ruheposition zurückgezogen. Dann wird eine Ladeeinheit so in der Ladeaufnahme positioniert, dass jeweils eine mit einem Kohlendioxidpellet bestückte Durchführung mit den Führungskanälen fluchtet. Das Kohlendioxidpellet befindet sich nunmehr vor dem distalen Ende der in ihrer Ruheposition befindlichen Stichnadel. Nach der erneuten Betätigung der Antriebseinrichtung/en treibt die Stichnadel das Kohlendioxidpellet in den zuvor eröffneten Stichkanal im Fleischstück hinein. Die Stichnadel wird anschließend von der Antriebseinrichtung wieder in ihre Ruheposition gebracht, während das Kohlendioxidpellet im Stichkanal verbleibt und dort in der Folge für eine gleichmäßige Durchkühlung des Fleischstücks sorgt.

Bei der erfindungsgemäßen Vorrichtung hat die Stichnadel also eine Doppelfunktion, sie sorgt für die Ausbildung des Stichkanals im Frischfleisch und für das anschließende Einschieben des Trockeneispellets in den Stichkanal. Da der Innendurchmesser des Stichkanals im Wesentlichen dem Außendurchmesser des Trockeneispellets entspricht, ist dieses nach dem Einschieben in der Regel sicher und fest im Gewebe angeordnet.

Die Bewegung der Stichnadel in die Arbeitsposition bzw. in die Ruheposition durch die Antriebseinrichtung erfolgt beispielsweise mechanisch, etwa mittels Federkräfte, pneumatisch, etwa durch Pressluft, oder elektrisch, etwa durch einen oder mehrere Elektromagneten oder mit einem Elektromotor. Im Falle eines Elektromotors kommt beispielsweise ein Servomotor oder ein Linearmotor zum Einsatz. Die Antriebseinheit ist dabei bevorzugt mit Mitteln ausgerüstet, die eine Überführung einer Drehbewegung, beispielsweise einer Drehbewegung der Welle eines Elektromotors, in eine translatorische Bewegung ermöglichen, wie beispielsweise ein Schraubgetriebe. Beispielsweise umfasst die Antriebseinrichtung einen Servomotor und ein mit diesem wirkverbundenes Schraubgetriebe, mittels derer die Stichnadeln sehr genau in einen vorgesehenen Bereich des zu behandelnden Fleischstücks eingebracht und durch den sich dabei ergebenden Stichkanal wieder zurückgezogen werden können. Alternativ oder ergänzend zu den vorgenannten Antriebsmöglichkeiten kann die Antriebseinrichtung auch einen Linearmotor zum translatorischen Bewegen der Stichnadeln umfassen.

Dabei können gleiche oder unterschiedliche Wirkprinzipien beim Vorschieben und beim Zurückziehen der Stichnadel zum Einsatz kommen; beispielsweise wird die Stichnadel mittels Pressluft in ihre Arbeitsposition gebracht und mittels einer rückstellenden Feder zurück in die Ruheposition, oder in beiden Fällen kommt Pressluft, ein elektrischer Antrieb oder Federmittel zum Einsatz. Insbesondere zur Erleichterung einer gründlichen Reinigung sind Gehäuse und Stichnadeln bevorzugt aus Edelstahl gefertigt.

Die Ladeeinheit dient als austauschbares Magazin für Trockeneispellets und wird nach einer Entleerung aus der Ladeaufnahme entnommen und durch eine neue, mit Trockeneispellets bestückte Ladeeinheit ersetzt, die in die Ladeaufnahme eingesetzt wird. Um das Einsetzen der Ladeeinheit zu erleichtern, können im Gehäuse geeignete Elemente, wie beispielsweise Führungsschienen und/oder Rasten vorgesehen sein.

Eine zweckmäßige Weiterbildung der Erfindung ist dadurch gekennzeichnet, dass im Gehäuse eine Mehrzahl an Injektionseinrichtungen angeordnet ist, die jeweils einen hinteren und einen mit dem hinteren fluchtenden vorderen Führungskanal aufweisen.

Die zugehörende Ladeeinheit besitzt zumindest eine der Anzahl der zueinander fluchtenden Führungskanäle entsprechende Anzahl an mit Trockeneispellets bestückbaren Durchführungen, die im Einbauzustand der Ladeeinheit zwischen den zueinander fluchtenden Führungskanälen verlaufen und ihrerseits mit diesen fluchten. Bei dieser Ausgestaltung der erfindungsgemäßen Vorrichtung kann also gleichzeitig eine Mehrzahl an Trockeneispellets in ein Fleischstück eingebracht werden. Die Führungskanäle bzw. Durchführungen können dabei sehr dicht nebeneinander verlaufen, um eine große Anzahl an Pellets in ein enges Volumen einbringen zu können; beispielsweise grenzen die Führungskanäle bzw. Durchführungen mit ihren Außenwänden unmittelbar oder in einem Abstand von 0,5 mm bis 2 mm aneinander an. Oder die Führungskanäle und Durchführungen weisen einen vergleichsweise großen Abstand von beispielsweise 1-3 cm voneinander auf, um mit einer einzigen Betätigung der Vorrichtung eine großvolumige Durchkühlung des Fleischstücks zu erzielen.

Eine besonders bevorzugte Ausgestaltung der Erfindung sieht vor, dass in der Ladeeinheit eine Mehrzahl von mir Trockeneispellets bestückbaren Durchführungen vorgesehen sind, die im gleichen Radialabstand von einer Längsachse und in gleichen Winkelabständen zueinander angeordnet sind. Bei dieser Ausgestaltung ist dementsprechend auch im Gehäuse eine Mehrzahl von Führungskanälen vorgesehen, die in dem gleichem radialen Abstand zu einer Längsachse, die der Längsachse der Ladeeinheit in ihrem Einbauzustand entspricht, und in gleichen Winkelabständen zueinander angeordnet sind, sodass die Führungskanäle mit zumindest einigen der Durchführungen in eine fluchtende Position gebracht werden können.

Die Ladeeinheit ist dabei bevorzugt um die Längsachse drehbeweglich in der Ladeaufnahme aufgenommen. Durch Drehen der eingebauten Ladeeinheit können so die einzelnen Durchführungen oder Gruppen von Durchführungen nacheinander in eine zu den Führungskanälen fluchtende Position gebracht und darin geladene Trockeneispellets nacheinander in das Fleischstück appliziert werden. In diesem Fall ist es vorstellbar, im Gehäuse nur eine einzelne Injektionseinrichtung vorzusehen, mit deren Führungskanälen die Durchführungen der Ladeeinheit nacheinander in eine fluchtende Position gebracht und die Trockeneispellets in der Ladeeinheit nacheinander appliziert werden, oder mehrere Injektionseinrichtungen, die die gleichzeitige Applikation einer Gruppe von Trockeneispellets ermöglichen.

Bevorzugt steht die Ladeeinheit dabei mit einem im Gehäuse oder der Ladeeinheit angeordneten Revolvermechanismus in Wirkverbindung, der so ausgebildet ist, dass die Ladeeinheit nach einer Betätigung der Antriebseinrichtung derart, dass die Stichnadel bzw. die Stichnadeln in ihre Ruheposition zurückgezogen werden, automatisch von einer ersten Position, in der eine erste Durchführung oder eine erste Gruppe von Durchführungen mit den Führungskanälen des Gehäuses fluchtet, in eine zweite Position gedreht wird, in der eine zweite Durchführung oder eine zweite Gruppe von Durchführungen mit den Führungskanälen des Gehäuses fluchten.

Die in das Gehäuse eingesetzte Ladeeinheit weist also zwei Betriebspositionen auf, die durch eine begrenzte Drehung der Ladeeinheit ineinander überführt werden können und in denen jeweils unterschiedliche Durchführungen oder Gruppen von Durchführungen mit den Führungskanälen fluchten. In einer bevorzugten Vorgehensweise ist eine erste Gruppe von Durchführungen beim Einsetzen der Ladeeinheit in das Gehäuse leer, eine zweite Gruppe von Durchführungen jedoch mit Trockeneispellets bestückt. In der ersten Betriebsposition stoßen die Stichnadeln durch die leeren Durchführungen der Ladeeinheit hindurch und dringen unter Ausbildung von Strichkanälen in das Fleischstück ein. Nach dem Zurückziehen der Stichnadeln in ihre Ruheposition und der Drehung des Ladegeräts in die zweite Betriebsposition befindet sich nunmehr vor jeder der Stichnadeln eine mit einem Kohlendioxidpellet bestückte Durchführung. Beim erneuten Vortreiben der Stichnadeln werden die Trockeneispellets somit von den Stichnadeln an- und in die Stichkanäle hineingetrieben.

Alternativ oder ergänzend zur drehbeweglichen Anordnung der Ladeeinheit im Einbauzustand sieht eine bevorzugte Ausgestaltung der Erfindung vor, dass die Ladeeinrichtung seitlich in eine Ladeaufnahme des Gehäuses einschiebbar und in der Ladeaufnahme arretierbar ist. Bevorzugt kann die Ladeaufnahme auch so ausgestaltet sein, dass eine Mehrzahl von Ladeeinheiten an der Vorrichtung angeordnet ist, die jeweils durch seitliches Verschieben nacheinander in eine Position (Arbeitsposition) gebracht werden, in denen ihre Durchführungen mit Führungskanälen des Gehäuses fluchten. Die Verschiebung der Ladeeinheiten in ihre Arbeitsposition erfolgt dabei bevorzugt automatisch, beispielsweise mittels eines elektrischen Antriebs, der von einer Bedienperson der Vorrichtung durch Knopfdruck betätigt wird.

Um einerseits eine hinreichende Durchkühlung eines Fleischstücks zu erzielen und andererseits eine handhabbare manuelle Bedienung der Vorrichtung zu ermöglichen, sollten die mit der erfindungsgemäßen Vorrichtung injizierten Trockeneispellets jeweils eine Masse zwischen 5g und 50 g und eine Volumen zwischen 3 cm³ und 30cm³ aufweisen, bei einem Durchmesser zwischen 5 mm und 15 mm. Die Gesamtmasse an Kohlendioxid, die während einer Injektion gleichzeitig in das behandelte Fleischstück eingebracht wird, beträgt beispielsweise zwischen 20g und 250g, bevorzugt zwischen 100g und 150g.

Der Durchmesser der Stichnadeln entspricht dem Durchmesser der Trockeneispellets und ihre Länge ist so gewählt, dass im Fleischstück ein für die Länge der zu injizierenden Trockeneispellets hinreichender Stichkanal erzeugt werden kann. Demzufolge weisen auch die Führungskanäle und die Durchführungen der Ladeeinheit bevorzugt einen Durchmesser auf, der - zur Gewährleistung einer guten axialen Beweglichkeit - geringfügig über dem Durchmesser der zu injizierenden Trockeneispellets bzw. der Stichnadeln liegt, also ebenfalls etwa zwischen 5 mm und 15 mm.

Bevorzugt sind im Gehäuse eine Anzahl von wenigstens drei Injektionseinrichtungen, besonders bevorzugt zwischen vier und sechzehn Injektionseinrichtungen vorgesehen. Die Anzahl an Durchführungen in der entsprechenden Ladeeinheit ist mindestens so groß wie die Zahl der Injektionseinheiten im Gehäuse.

In einer abermals vorteilhaften Weiterbildung der Erfindung ist die Vorrichtung als Handgerät ausgebildet und insbesondere mit einem Griff und/oder mit einem manuell zu betätigenden Auslösemechanismus versehen, der einer Bedienperson das Tragen der Vorrichtung und das Auslösen der Vortriebseinrichtungen erlaubt. Im Betrieb wird die Vorrichtung mit ihrer Frontseite auf ein zu behandelnde Fleischstück aufgesetzt und anschließend von der Bedienperson ein automatischer Auslösemechanismus betätigt, durch den automatisch das Hervorstoßen der Stichnadeln in das Fleischstück erfolgt, wobei im Gewebe des Fleischstücks Stichkanäle erzeugt werden. Anschließend, ohne dass es dazu einer eigenen Auslösung durch die Bedienperson bedarf, werden die Trockeneispellets injiziert.

Die erfindungsgemäße Vorrichtung eignet sich zur Kühlung verschiedener Fleischsorten, insbesondere von Rind- und Schweinefleisch. Eine bevorzugte Anwendung ist die Behandlung von Schinken (Schweinekeule oder -schulter), und ermöglicht insbesondere im Bereich eines Knochens eine gleichmäßige Kühlung um den Knochen herum.

Durch die Erfindung gelingt es insbesondere auch in einem großen, unzerteilten oder nicht entbeinten Fleischstück eine rasche Abkühlgeschwindigkeit im gesamten Fleischvolumen zu erzielen, wodurch eine gleichmäßig hohe Fleischqualität erzielt wird. Bevorzugt erfolgt dabei eine gleichmäßige Abkühlung im gesamten Volumen des Fleischstücks um eine Temperaturdifferenz von 25 bis 40°C innerhalb eines Zeitraums von 30min bis 120 min.

Anhand der Zeichnung soll ein Ausführungsbeispiel der Erfindung näher erläutert werden. In schematischen Ansichten zeigen:
- Fig. 1- 3:: Eine erfindungsgemäße Vorrichtung in einem ausschnittsweise dargestellten Längsschnitt während unterschiedlicher Behandlungsphasen,
- Fig. 4:: eine Ladeeinheit für die Vorrichtung aus Fig. 1 in einer Frontansicht,
- Fig. 5:: die Ladeeinheit einer anderen erfindungsgemäßen Vorrichtung in einer Frontansicht

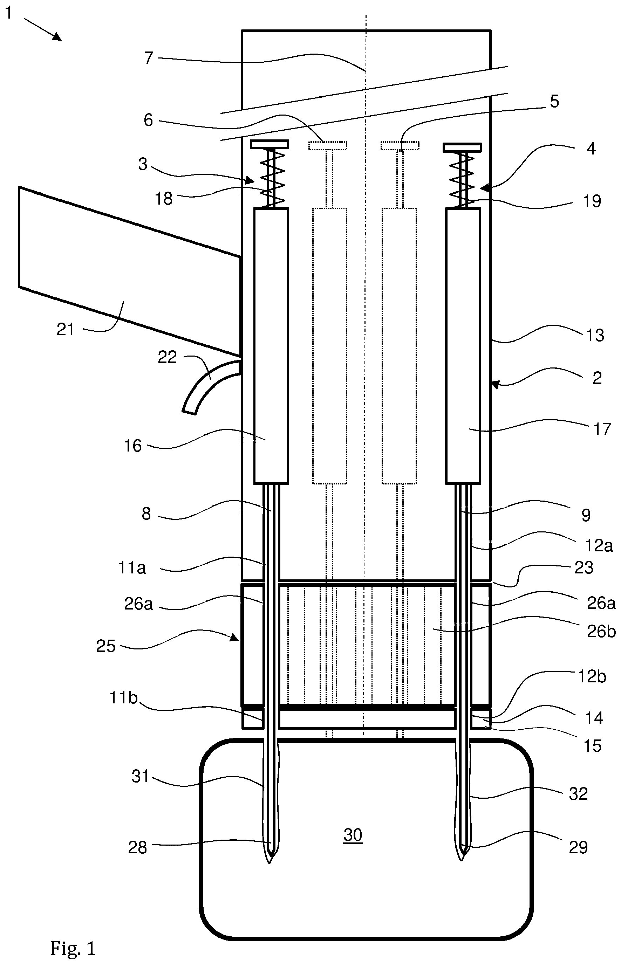

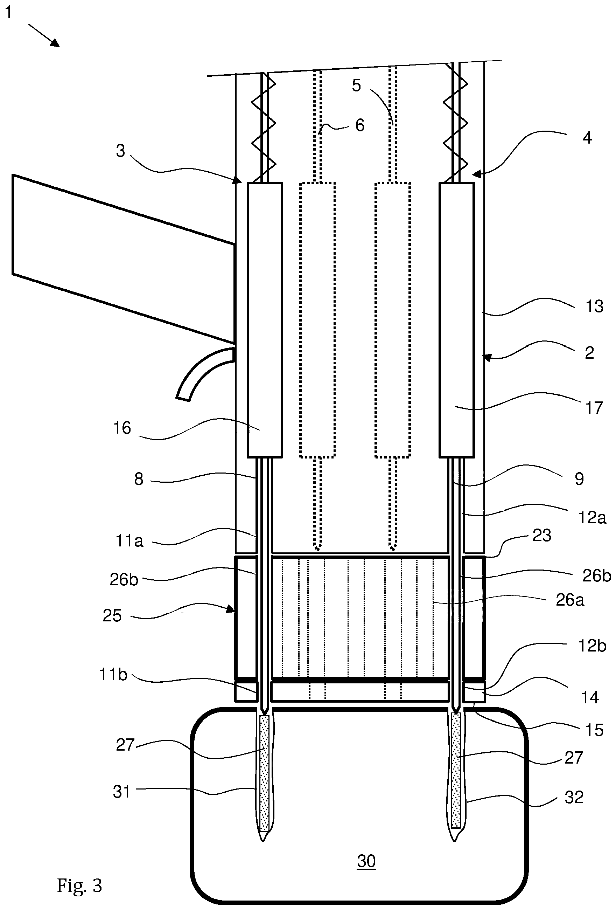

Die in den Figs.1-3 ausschnittsweise dargestellte Vorrichtung 1 umfasst ein Gehäuse 2, innerhalb dessen eine Anzahl von Injektionseinrichtungen 3, 4, 5, 6 aufgenommen sind. Im hier gezeigten Ausführungsbeispiel sind innerhalb des Gehäuses 2 insgesamt sechs Injektionseinrichtungen vorhanden, von denen hier jedoch aus Gründen der Übersichtlichkeit nur die Injektionseinrichtungen 3, 4 detaillierter gezeigt und die Injektionseinrichtungen 5, 6, da außerhalb der Schnittebene, nur angedeutet sind. Zwei weitere Injektionseinrichtungen sind nicht gezeigt, gleichwohl vorhanden.

Die Injektionseinrichtungen 3, 4, 5, 6 sind jeweils gleich aufgebaut und innerhalb des Gehäuses 2 in gleichen Winkelabständen und gleichem radialen Abstand zu einer Längsachse 7 des Gehäuses 2 angeordnet. Jede der Injektionseinrichtungen 3, 4, 5, 6 umfasst eine Stichnadel 8, 9, die jeweils in zwei miteinander fluchtenden Führungskanälen 11a, 11b; 12a, 12b innerhalb des Gehäuses 2 axialbeweglich aufgenommen ist, wobei die Führungskanäle 11a, 12a in einem Hinterabschnitt 13 und die Führungskanäle 11b, 12b in einem Vorderabschnitt 14 des Gehäuses verlaufen. Die im Vorderabschnitt 14 verlaufenden Führungskanäle 11b, 12b münden an einer Frontseite 15 des Gehäuses 2 aus diesem aus.

Typischerweise weisen die Führungskanäle 11a, 11b; 12a, 12b einen Innendurchmesser zwischen 5 mm und 15 mm auf; der Außendurchmesser der Stichnadeln 8, 9 ist geringfügig kleiner und so gewählt, dass ein reibungsarmes Gleiten der Stichnadeln 8, 9 innerhalb der Führungskanäle 11a, 11; 12a, 12b in axialer Richtung möglich ist.

Die Stichnadeln 8, 9 stehen jeweils mit einer Antriebseinrichtung in Wirkverbindung, die im Hinterabschnitt 13 des Gehäuses 2 aufgenommen ist. Die Antriebseinrichtung umfasst jeweils eine Vortriebseinrichtung 16, 17 und eine Rückführungseinrichtung 18, 19. Bei den Vortriebseinrichtungen 16, 17 handelt es sich um beispielsweise pneumatisch, etwa mittels Druckluft, oder elektromagnetisch betriebene Einrichtungen, mittels denen des Stichnadeln 8, 9 in axialer Richtung begrenzt aus den an der Frontseite 15 befindlichen Mündungsöffnungen der Führungskanäle 11b, 12b hinausgestoßen werden. Bei den Rückführungseinrichtungen 18, 19 handelt es sich im Ausführungsbeispiel um Federmittel, mittels derer die Stichnadeln 8, 9 nach dem begrenzten Hinausstoßen aus den Mündungsöffnungen der Führungskanäle 11b, 12b automatisch in die Führungskanäle 11a, 12a zurückgezogen werden. Allerdings können auch in der Rückführungseinrichtung 18, 19 pneumatische oder elektromagnetische Mittel zum Einsatz kommen; ebenso vorstellbar ist der Einsatz eines Elektromotor, etwa ein Servomotor, der über ein geeignetes Getriebe, etwa ein Schraubgetriebe, sowohl das begrenzte Hinausstoßen der Stichnadeln 8, 9 aus den Führungskanälen 11b, 12b als auch deren Rückführung in die Führungskanäle 11a, 12a bewirkt.

Weiterhin ist die Vorrichtung 1 im hier gezeigten Ausführungsbeispiel als Handgerät ausgebildet, das an einem Griff 21 von einer Bedienperson gehalten und an einem Auslöser 22 von dieser manuell betätigt werden kann.

Zwischen dem Hinterabschnitt 13 und dem Vorderabschnitt 14 des Gehäuses 2 ist in einer die beiden Abschnitte 13, 14 verbindenden Ladeaufnahme 23 eine Ladeeinheit 25 angeordnet. Bei der Ladeeinheit 25 handelt es sich im Ausführungsbeispiel nach Fig. 1-4 um ein kreiszylindrisch aufgebautes Bauteil, das lösbar mit der Ladeaufnahme 23 des Gehäuses 2 verbunden und um eine Längsachse drehbar gelagert ist, die im hier gezeigten Ausführungsbeispiel mit der Längsachse 7 des Gehäuses übereinstimmt. Die Ladeeinheit 25 besitzt eine Anzahl von in gleichen Winkelabständen angeordneten Durchführungen 26a, 26b, die die Ladeeinheit 25 in ihrer gesamten Länge durchziehen. Der Innendurchmesser der Durchführungen 26a, 26b und ihr radialer Abstand von der Längsachse 7 entsprechen dem Innendurchmesser bzw. dem Radialabstand der Führungskanäle 11a, 11b; 12a, 12b. Im hier gezeigten Ausführungsbeispiel beträgt die Anzahl der Durchführungen 26a, 26b ein Vielfaches der Anzahl der Paare von Führungskanälen 11a, 11b; 12a, 12b, also beispielsweise zwölf. Es können jedoch auch gleich viele Durchführungen 26a, 26b wie Paare von Führungskanälen 11a, 12a bzw. 11b, 12b vorgesehen sein. Mittels eines hier nicht gezeigten Revolvermechanismus kann die Ladeeinheit 25 aus einer ersten Position, in der eine erste Gruppe von Durchführungen 26a mit den Führungskanälen 11a, 11b; 12a, 12b fluchtet, in eine zweite Position bewegt werden, in der eine zweite Gruppe von Durchführungen 26b mit den Führungskanälen 11a, 11b; 12a, 12b fluchtet.

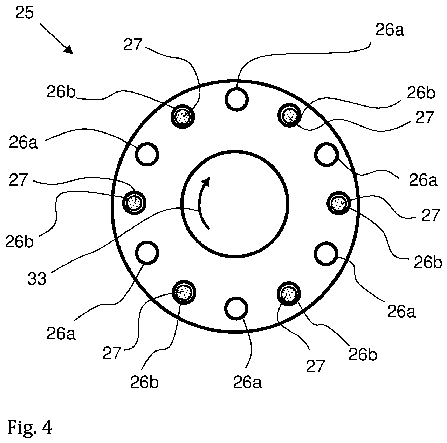

Im Gebrauch der Vorrichtung 1 wird zunächst eine Ladeeinheit 25 mit Trockeneispellets 27 beladen, wobei nur jede zweite Durchführung (26b) mit jeweils einem Kohlendioxidpellet 27 bestückt wird, während die übrigen Durchführungen (26a) leer bleiben, wie in Fig. 4 gezeigt. Die Länge und der Durchmesser der Trockeneispellets 27 ist der Länge und dem Innendurchmesser der Durchführungen 26a, 26b angepasst, beispielsweise beträgt die Länge der Pellets (und damit der Ladeeinheit 25) zwischen 5 cm und 10 cm, und ihr Durchmesser zwischen 4,9 mm und 14,9 mm. Die Injektionseinrichtungen 3, 4, 5, 6 werden in eine Betriebsposition gebracht, in der die Stichnadeln 8, 9 in den Führungskanälen 11a, 12a im Hinterabschnitt 13 des Gehäuses 2 zurückgezogen sind. Anschließend wird die Ladeeinheit 25 in das Gehäuse 2 eingesetzt, und zwar derart, dass die nicht mit Kohledioxidpellets 27 bestückten Durchführungen 26a mit den Führungskanälen 11a, 11b; 12a, 12b fluchten.

Durch Betätigung der Vortriebseinrichtungen 16, 17 werden die Stichnadeln 8, 9 durch die Durchführungen 26a und die Führungskanäle 11b, 12b herausgestoßen. Die an ihren jeweiligen Vorderenden 28, 29 angespitzten Stichnadeln 8, 9 stoßen in ein vor der Frontseite 15 des Gehäuses 2 befindliches Fleischstück 30, beispielsweise ein Schinken, hinein und bildet dort einen Kranz von Stichkanälen 31, 32 aus. Beispielsweise werden die Stichkanäle 31, 32 um einen im Fleischstück 30, vorliegenden Knochen herum eingebracht.

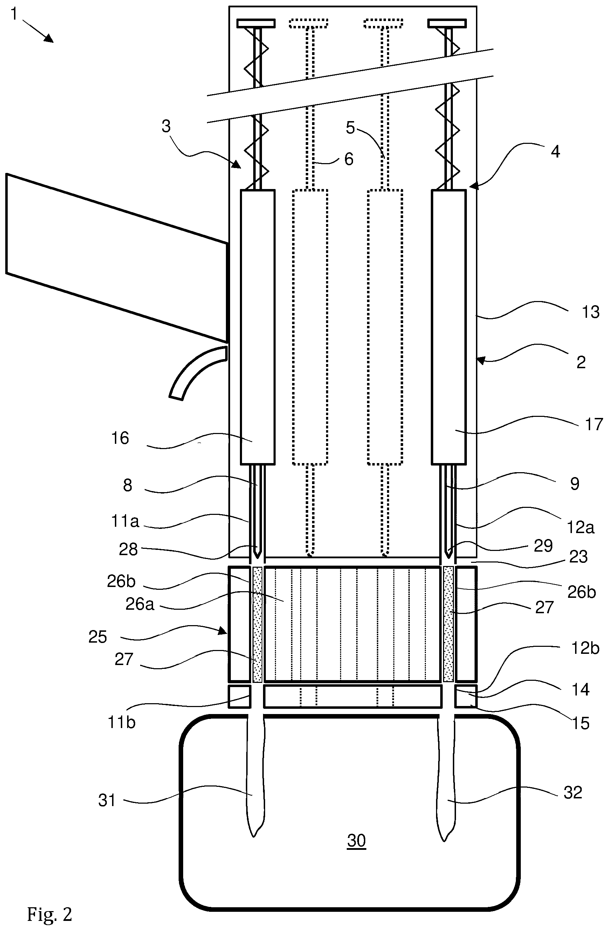

Im Anschluss an die Ausbildung der Stichkanäle 31, 32 ziehen sich die Stichnadeln 8, 9 unter der Wirkung der Rückführungseinrichtungen 18, 19 wieder in die im Hinterabschnitt 13 des Gehäuses befindlichen Führungskanäle 11a, 12a zurück. Anschließend wird die Ladeeinheit 25 in Richtung des Pfeils 33 um die Längsachse 7 gedreht, bis eine neue Gruppe von Durchführungen 26b mit den Führungskanälen 11a, 11b; 12a, 12b fluchten. Da diese Durchführungen 26b mit jeweils einem Kohlendioxidpellet 27 bestückt sind, befindet sich nun vor jedem Vorderende 28, 29 einer jeden Stichnadel 8, 9 ein Kohlendioxidpellet 27, wie in Fig. 2 gezeigt.

Nach der erneuten - manuell oder automatisch ausgelösten - Betätigung der Vortriebseinrichtungen 16, 17 stoßen die Stichnadeln 8, 9 die Trockeneispellets 27 in die Stichkanäle 31, 32 hinein. Die Stichnadeln 8, 9 werden anschließend unter der Wirkung der Rückführungseinrichtungen 18, 19 in ihre vorherige Position gebracht, während die Trockeneispellets 27 in den Stichkanälen 31, 32 verbleiben. Auf diese Weise wird eine Mehrzahl von Trockeneispellets 27 großvolumig in das Fleischstück 30, beispielsweise zwischen Oberschale und Unterschale eines Schinkens, platziert und in der Folge eine gleichmäßige Durchkühlung des Fleischstücks 30 erzielt.

Die Ladeeinheit 25 wird anschließend aus dem Gehäuse 2 entnommen, in einer hier nicht gezeigten Einrichtung mit Trockeneispellets 27 beladen und anschließend wieder eingesetzt oder durch eine andere, mit Trockeneispellets bestückte Ladeeinheit ersetzt.

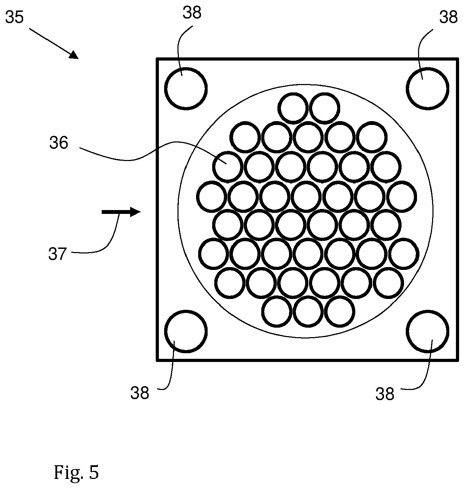

Die in Fig. 5 gezeigte Ladeeinheit 35 unterscheidet sich von der Ladeeinheit 25 dadurch, dass die mit Trockeneispellets bestückbaren Durchführungen 36 im Unterscheid zu den Durchführungen 27 nicht drehsymmetrisch um eine Achse, sondern in zueinander versetzten Reihen angeordnet sind. Demzufolge wird die Ladeeinheit 35 auch nicht in der Ladeaufnahme einer - hier nicht gezeigten - erfindungsgemäßen Vorrichtung drehsymmetrisch gelagert, sondern sie wird seitlich, beispielsweise in Richtung des Pfeils 37, in die Vorrichtung eingeschoben. Die Ladeeinheit 35 weist dazu Befestigungsmittel, beispielsweise Bohrungen 38 auf, an denen die Ladeeinheit an einem hier nicht gezeigten Führungsschlitten befestigt wird, mittels dessen die Ladeeinheit 35 in die Vorrichtung eingeschoben werden kann. Die zugehörende Vorrichtung weist eine entsprechende Zahl von Führungskanälen auf, die nach dem Einschieben der Ladeeinheit 35 zu deren Durchführungen 36 fluchtend angeordnet sind. Mit einer solchen Vorrichtung ist es insbesondere möglich, eine große Anzahl an Trockeneispellets 27 gleichzeitig und sehr dicht nebeneinander in ein Fleischstück 30 einzubringen.

### Bezugszeichenliste:

- 1: Vorrichtung
- 2: Gehäuse
- 3: Injektionseinrichtung
- 4: Injektionseinrichtung
- 5: Injektionseinrichtung
- 6: Injektionseinrichtung
- 7: Längsachse
- 8: Stichnadel
- 9: Stichnadel
- 10: -
- 11a, 11b: Führungskanal
- 12a, 12b: Führungskanal
- 13: Hinterabschnitt
- 14: Vorderabschnitt
- 15: Frontseite
- 16: Vortriebseinrichtung
- 17: Vortriebseinrichtung
- 18: Rückführungseinrichtung
- 19: Rückführungseinrichtung
- 20: -
- 21: Griff
- 22: Auslöser
- 23: Ladeaufnahme
- 24: -
- 25: Ladeeinheit
- 26a, 26b: Durchführung
- 27: Trockeneispellets
- 28: Vorderende
- 29: Vorderende
- 30: Fleischstück
- 31: Stichkanal
- 32: Stichkanal
- 33: Pfeil
- 34: -
- 35: Ladeeinheit
- 36: Durchführungen
- 37: Pfeil
- 38: Bohrung

## Patentansprüche

1. Vorrichtung zum Einbringen von Trockeneispellets in Frischfleisch, mit wenigstens einer in einem Gehäuse (2) aufgenommenen Injektionseinrichtung (3, 4, 5, 6), **dadurch gekennzeichnet, dass** die Injektionseinrichtung einen sich längs durch einen Hinterabschnitt (13) des Gehäuses erstreckenden hinteren Führungskanal (11a, 12a) und einen zu diesem fluchtenden, sich durch einen Vorderabschnitt (14) des Gehäuses (2) erstreckenden und an einer Frontseite (15) des Gehäuses (2) ausmündenden vorderen Führungskanal (11b, 12b) zum axialbeweglichen Führen einer an ihrem distalen Ende zugespitzten Stichnadel (8, 9), sowie eine Antriebseinrichtung (16, 17, 18, 19) zum Bewegen der Stichnadel (8, 9) zwischen einer Arbeitsposition, in der sie mit ihrem zugespitzten distalen Ende von der Frontseite (15) des Gehäuses (2) vorsteht, und einer Ruheposition, in der sie im Hinterabschnitt (13) des Gehäuses (2) aufgenommen ist, aufweist, und mit einer Ladeeinheit (25), die wenigstens eine mit Trockeneispellets (27) bestückbare Durchführung (26a, 26b) aufweist und die derart lösbar in eine zwischen dem Hinterabschnitt (13) und dem Vorderabschnitt (14) des Gehäuses (2) angeordnete Ladeaufnahme (23) einsetzbar ist, dass die Durchführung (26a, 26b) mit dem hinteren Führungskanal (11a, 12a) und dem vorderen Führungskanal (11b, 12b) fluchtet.

2. Vorrichtung nach Anspruch 1, **dadurch gekennzeichnet, dass** im Gehäuse (2) eine Mehrzahl an Injektionseinrichtungen (3, 4, 5, 6) angeordnet ist, die jeweils einen hinteren Führungskanal (12a, 12b) und einen mit diesem fluchtenden vorderen Führungskanal (11a, 11b) aufweisen und die Ladeeinheit (25) zumindest mit einer der Anzahl der zueinander fluchtenden Führungskanäle (11a, 11b; 12a, 12b) entsprechenden Anzahl von mit Trockeneispellets (27) bestückbaren Durchführungen (26a, 26b) ausgerüstet ist.

3. Vorrichtung nach Anspruch 1 oder 2, **dadurch gekennzeichnet, dass** in der Ladeeinheit (25) eine Mehrzahl von mit Trockeneispellets (27) bestückbaren Durchführungen (26a, 26b) vorgesehen sind, die im gleichen Radialabstand von einer Längsachse (7) und in gleichen Winkelabständen zueinander angeordnet sind.

4. Vorrichtung nach Anspruch 3, **dadurch gekennzeichnet, dass** die Ladeeinheit (25) im Einbauzustand um die Längsachse (7) drehbeweglich im Gehäuse (2) aufgenommen ist.

5. Vorrichtung nach Anspruch 4, **dadurch gekennzeichnet, dass** die Ladeeinheit (25) im Einbauzustand mit einem Revolvermechanismus im Gehäuse (2) wirkverbunden ist, der so ausgebildet ist, dass die Ladeeinheit (25) nach einer Betätigung der Antriebseinrichtung (16, 17, 18, 19), bei der die Stichnadel (8, 9) der Injektionseinrichtung (3, 4, 5, 6) oder die Stichnadeln (8, 9) der Injektionseinrichtungen (3, 4, 5, 6) aus der Arbeitsposition in die Ruheposition bewegt werden, automatisch von einer ersten Position, in der eine erste Durchführung (26a, 26b) oder eine erste Gruppe von Durchführungen (26a, 26b) mit Führungskanälen (11a, 11b; 12a, 12b) im Gehäuse (2) fluchten in eine zweite Position bringbar ist, in der eine zweite Durchführung (26a, 26b) oder eine zweite Gruppe von Durchführungen(26a, 26b) mit Führungskanälen (11a, 11b, 12a, 12b) im Gehäuse (2) fluchtet.

6. Vorrichtung nach einem der vorhergehenden Ansprüche, **dadurch gekennzeichnet, dass** die Ladeeinheit (25) seitlich in die Ladeaufnahme (23) des Gehäuses (2) einschiebbar und in der Ladeaufnahme arretierbar ist.

7. Vorrichtung nach einem der vorhergehenden Ansprüche, **dadurch gekennzeichnet, dass** die Antriebseinrichtung (16, 17, 18, 19) zum Bewegen der Stichnadeln (8, 9) in die Arbeitsposition und/oder in die Ruheposition jeweils mechanische, pneumatische und/oder elektrische Antriebsmittel umfasst.

8. Vorrichtung nach Anspruch 7, **dadurch gekennzeichnet, dass** die Antriebseinrichtung (16, 17, 18, 19) zum Bewegen der Stichnadeln wenigstens einen Elektromotor, bevorzugt einen Servomotor oder einen Linearmotor umfasst.

9. Vorrichtung nach einem der vorhergehenden Ansprüche, **dadurch gekennzeichnet, dass** die Führungskanäle (11a, 11b; 12a, 12b) und die Durchführungen (26a, 26b) jeweils einen gleichen Durchmesser zwischen 5 mm und 15 mm aufweisen.

10. Vorrichtung nach einem der vorhergehenden Ansprüche, **dadurch gekennzeichnet, dass** im Gehäuse (2) im Hinterabschnitt (13) und im Vorderabschnitt (14) jeweils wenigstens drei, bevorzugt zwischen vier und sechzehn zueinander fluchtende Führungskanäle (11a, 11b; 12a, 12b) und in der Ladeeinheit (25) wenigstens sechs, bevorzugt zwischen acht und sechzehn Durchführungen (26a, 26b) vorgesehen sind.

11. Vorrichtung nach einem der vorhergehenden Ansprüche, **dadurch gekennzeichnet, dass** die Vorrichtung (1) als Handgerät ausgebildet ist.

## Claims

1. Device for introducing dry ice pellets into fresh meat, comprising at least one injection means (3, 4, 5, 6), which is received in a housing (2), **characterized in that** the injection means has a rear guide channel (11a, 12a) extending longitudinally through a rear section (13) of the housing and a front guide channel (11b, 12b) in alignment therewith that extends through a front section (14) of the housing (2) and exits at a front side (15) of the housing (2), for guiding in an axially movable manner a piercing needle (8, 9) that is pointed at its distal end, and has a drive means (16, 17, 18, 19) for moving the piercing needle (8, 9) between a working position, in which it protrudes with its pointed distal end from the front side (15) of the housing (2), and a rest position, in which it is received in the rear section (13) of the housing (2), and comprising a charging unit (25), which has at least one leadthrough (26a, 26b) that can be stocked with dry ice pellets (27) and that can be detachably inserted into a charging receiver (23) located between the rear section (13) and the front section (14) of the housing (2) in such a manner that the leadthrough (26a, 26b) is in alignment with the rear guide channel (11a, 12a) and the front guide channel (11b, 12b).

2. Device according to Claim 1, **characterized in that** located in the housing (2) is a plurality of injection means (3, 4, 5, 6), each of which has a rear guide channel (12a, 12b) and a front guide channel (11a, 11b) in alignment therewith, and the charging unit (25) is equipped at least with a number of leadthroughs (26a, 26b), which can be stocked with dry ice pellets (27), corresponding to the number of guide channels (11a, 11b; 12a, 12b) in mutual alignment.

3. Device according to Claim 1 or 2, **characterized in that** a plurality of leadthroughs (26a, 26b), which can be stocked with dry ice pellets (27) and which are located at the equal radial distance from a longitudinal axis (7) and at equal angular distances from one another, are provided in the charging unit (25).

4. Device according to Claim 3, **characterized in that** the charging unit (25), when having been fitted, is received in the housing (2) so as to be rotatable about the longitudinal axis (7).

5. Device according to Claim 4, **characterized in that** the charging unit (25), when having been fitted, is operatively connected to a turret mechanism in the housing (2), which is realized in such a manner that the charging unit (25), following an actuation of the drive means (16, 17, 18, 19) in which the piercing needle (8, 9) of the injection means (3, 4, 5, 6), or the piercing needles (8, 9) of the injection means (3, 4, 5, 6) are moved from the working position to the rest position, can be brought automatically from a first position, in which a first leadthrough (26a, 26b) or a first group of leadthroughs (26a, 26b) is in alignment with guide channels (11a, 11b; 12a, 12b) in the housing (2), into a second position, in which a second leadthrough (26a, 26b) or a second group of leadthroughs (26a, 26b) is in alignment with guide channels (11a, 11b, 12a, 12b) in the housing (2).

6. Device according to any one of the preceding claims, **characterized in that** the charging unit (25) can be pushed laterally into the charging receiver (23) of the housing (2) and can be locked in the charging receiver.

7. Device according to any one of the preceding claims, **characterized in that** the drive means (16, 17, 18, 19), for the purpose of moving the piercing needles (8, 9) into the working position and/or into the rest position, in each case comprises mechanical, pneumatic and/or electrical drive means.

8. Device according to Claim 7, **characterized in that** the drive means (16, 17, 18, 19), for the purpose of moving the piercing needles, comprises at least one electric motor, preferably a servomotor or a linear motor.

9. Device according to any one of the preceding claims, **characterized in that** the guide channels (11a, 11b; 12a, 12b) and the leadthroughs (26a, 26b) are in each case of the same diameter, of between 5 mm and 15 mm.

10. Device according to any one of the preceding claims, **characterized in that**, in the housing (2), at least three, preferably between four and sixteen guide channels (11a, 11b; 12a, 12b) in mutual alignment are provided in each case in the rear section (13) and in the front section (14), and at least six, preferably between eight and sixteen leadthroughs (26a, 26b) are provided in the charging unit (25).

11. Device according to any one of the preceding claims, **characterized in that** the device (1) is realized as a hand-held appliance.

## Revendications

1. Appareil pour introduire des pastilles de glace carbonique dans de la viande fraîche, comprenant au moins un dispositif d'injection (3, 4, 5, 6) logé dans un boîtier (2), **caractérisé en ce que** le dispositif d'injection comprend un canal de guidage arrière (11a, 12a) s'étendant à travers une partie arrière (13) du boîtier et un canal de guidage avant (11b, 12b) aligné avec celui-ci, s'étendant à travers une partie avant (14) du boîtier (2) et débouchant sur une face avant (15) du boîtier (2), pour le déplacement axial d'une aiguille (8, 9) pointue à son extrémité distale, ainsi qu'un dispositif d'entraînement (16, 17, 18, 19) pour déplacer l'aiguille (8, 9) entre une position de travail, dans laquelle elle fait saillie par son extrémité distale pointue depuis la face avant (15) du boîtier (2), et une position de repos, dans laquelle elle est logée dans la partie arrière (13) du boîtier (2), et comprenant une unité de chargement (25), qui présente au moins un passage (26a, 26b) apte à être garni de pastilles de glace carbonique (27) et qui est apte à être insérée de manière amovible dans un logement de chargement (23) disposé entre la partie arrière (13) et la partie avant (14) du boîtier (2) de telle sorte que le passage (26a, 26b) est aligné avec le canal de guidage arrière (11a, 12a) et le canal de guidage avant (11b, 12b).

2. Appareil selon la revendication 1, **caractérisé en ce qu'**une pluralité de dispositifs d'injection (3, 4, 5, 6) est disposée dans le boîtier (2), lesquels présentent chacun un canal de guidage arrière (12a, 12b) et un canal de guidage avant (11a, 11b) aligné avec celui-ci, et l'unité de chargement (25) est équipée d'au moins un nombre de passages (26a, 26b) aptes à être garnis de pastilles de glace carbonique (27) correspondant au nombre de canaux de guidage (11a, 11b ; 12a, 12b) alignés les uns avec les autres.

3. Appareil selon la revendication 1 ou la revendication 2, **caractérisé en ce qu'**il est prévu dans l'unité de chargement (25) une pluralité de passages (26a, 26b) aptes à être garnies de pastilles de glace carbonique (27), qui sont agencés à la même distance radiale d'un axe longitudinal (7) et à des distances angulaires égales les unes des autres.

4. Appareil selon la revendication 3, **caractérisé en ce que** l'unité de chargement (25) est logée dans le boîtier (2) de manière à être apte à tourner autour de l'axe longitudinal (7) à l'état montée.

5. Appareil selon la revendication 4, **caractérisé en ce que** l'unité de chargement (25), à l'état montée, est reliée fonctionnellement à un mécanisme de tourelle dans le boîtier (2), qui est conçu de telle sorte que l'unité de chargement (25), après un actionnement du dispositif d'entraînement (16, 17, 18, 19), lors duquel l'aiguille (8, 9) du dispositif d'injection (3, 4, 5, 6) ou les aiguilles (8, 9) des dispositifs d'injection (3, 4, 5, 6) sont déplacées de la position de travail à la position de repos, automatiquement d'une première position, dans laquelle un premier passage (26a, 26b) ou un premier groupe de passages (26a, 26b) sont alignés avec des canaux de guidage (11a, 11b ; 12a, 12b) dans le boîtier (2), à une deuxième position, dans laquelle un deuxième passage (26a, 26b) ou un deuxième groupe de passages (26a, 26b) est aligné avec des canaux de guidage (11a, 11b, 12a, 12b) dans le boîtier (2).

6. Appareil selon l'une des revendications précédentes, **caractérisé en ce que** l'unité de chargement (25) est apte à être insérée latéralement dans le logement de chargement (23) du boîtier (2) et est apte à être bloquée dans le logement de chargement.

7. Appareil selon l'une des revendications précédentes, **caractérisé en ce que** le dispositif d'entraînement (16, 17, 18, 19) pour déplacer les aiguilles (8, 9) dans la position de travail et/ou dans la position de repos comprend respectivement des moyens d'entraînement mécaniques, pneumatiques et/ou électriques.

8. Appareil selon la revendication 7, **caractérisé en ce que** les moyens d'entraînement (16, 17, 18, 19) pour déplacer les aiguilles comprennent au moins un moteur électrique, de préférence un servomoteur ou un moteur linéaire.

9. Appareil selon l'une des revendications précédentes, **caractérisé en ce que** les canaux de guidage (11a, 11b ; 12a, 12b) et les passages (26a, 26b) présentent chacun un même diamètre compris entre 5 mm et 15 mm.

10. Appareil selon l'une des revendications précédentes, **caractérisé en ce qu'**il est prévu dans le boîtier (2), dans la partie arrière (13) et dans la partie avant (14), respectivement au moins trois, de préférence entre quatre et seize canaux de guidage (11a, 11b ; 12a, 12b) alignés les uns par rapport aux autres, et dans l'unité de chargement (25) au moins six, de préférence entre huit et seize, passages (26a, 26b).

11. Appareil selon l'une des revendications précédentes, **caractérisé en ce que** l'appareil (1) est conçu sous la forme d'un appareil portatif.
